# EUROPÄISCHE PATENTSCHRIFT

(11) **EP 2 921 379 B1**
(45) Veröffentlichungstag und Bekanntmachung des Hinweises auf die Patenterteilung: **28.09.2016**
(21) Anmeldenummer: 15159349.8
(22) Anmeldetag: 17.03.2015
(51) Int. Cl.: B62D 61/12

(54) **Schwertransportfahrzeug zum Transportieren einer Last über eine Bodenfläche**
Heavy-duty vehicle to transport a load over a ground surface
Véhicule de transport lourd pour le transport d'une charge sur la surface du sol

(30) Priorität: 19.03.2014 DE 102014003888
(43) Veröffentlichungstag der Anmeldung: 23.09.2015
(73) Patentinhaber: MBB Fertigungstechnik GmbH, 48361 Beelen (DE)
(72) Erfinder: Minnecker, Maik, 33775 Versmold (DE); Zachewicz, Burkhard, 33428 Marienfeld (DE)
(74) Vertreter: Bittner, Thomas L.

(56) Entgegenhaltungen:
- DE-A1- 3 841 971
- DE-A1-102010 015 439
- US-A1- 2002 124 764
- US-B1- 8 523 203

## Beschreibung

Die Erfindung betrifft ein Schwertransportfahrzeug zum Transportieren einer Last über eine Bodenfläche.

### Hintergrund

Derartige Fahrzeuge dienen zum Transport schwerer Lasten. In einer Ausführung als fahrerlose Schwertransportfahrzeuge verfügen diese regelmäßig über ein Fahrgestell, an dem vom und hinten angetriebene Räder mittels einer jeweiligen Radaufhängung angeordnet sind.

Im Dokument DE 38 41 971 A1 ist ein fahrerloses Schwertransportfahrzeug offenbart, bei dem die angetriebenen Räder jeweils mehrere auf dem Umfang angeordnete Rollenkörper aufweisen, die an dem jeweiligen Rad drehbar und mit einer zur Antriebsachse des jeweiligen Rades schräg verlaufenden Drehachse angeordnet sind. Solche Räder werden auch als Mecanum-Räder bezeichnet. Bei dem bekannten Schwertransportfahrzeug sind den angetriebenen Rädern Lenkrollen zugeordnet, die mit den angetriebenen Rädern gemeinsam in einem Fahrschemelträger gelagert sind, der um eine horizontal verlaufende Schwenkachse verschwenkbar ist. Die Fahrschemelträger weisen so einen wippenartigen Aufbau auf, bei dem die Relativlage zwischen Lenkrolle und Antriebsachse des zugeordneten angetriebenen Rades fest ist. Verändert sich die Stellung des angetriebenen Rades aufgrund einer Schwenkbewegung des Fahrschemelträgers, so erzwingt dieses in gleicher Weise eine Schwenkbewegung der Lenkrolle.

Ein weiteres fahrerloses Schwertransportfahrzeug ist im Dokument EP 2 159 073 B1 offenbart. Bei dem bekannten Fahrzeug ist die Radaufhängung für die angetriebenen Räder vom und hinten schwenkbar am Fahrgestell gelagert. Die Schwenkbewegung der Radaufhängungen wird gedämpft durch ein jeweils zugeordnetes Dämpfungselement.

### Zusammenfassung

Aufgabe der Erfindung ist es, ein verbessertes Schwertransportfahrzeug anzugeben, bei dem eine Überbelastung der angetriebenen Räder des Fahrzeuges vermieden ist.

Zur Lösung der Aufgabe ist ein Schwertransportfahrzeug zum Transportieren einer Last über eine Bodenfläche nach dem unabhängigen Anspruch 1 geschaffen. Vorteilhafte Ausgestaltungen sind Gegenstand von abhängigen Unteransprüchen.

Es ist ein Schwertransportfahrzeug zum Transportieren einer Last über eine Bodenfläche vorgesehen, welches ein Fahrgestell aufweist, an dem eine Transportfläche angeordnet ist, auf der eine zu transportierende Last angeordnet werden kann. Das Schwertransportfahrzeug weist vordere und hintere angetriebene Räder auf, die die jeweils mittels einer Radaufhängung am Fahrgestell angeordnet sind und die jeweils mehrere auf dem Radumfang angeordnete Rollenkörper aufweisen. Die Rollenkörper sind an dem jeweiligen Rad drehbar und mit einer zur Antriebs- oder Laufachse des jeweiligen Rades schräg verlaufenden Drehachse angeordnet. Weiterhin sind am Fahrgestell Schwerlastlenkrollen angeordnet, die jeweils den vorderen oder den hinteren angetriebenen Rädern zugeordnet sind. Die Schwerlastlenkrollen weisen ein um eine horizontale Drehachse freilaufendes Rad auf, welches in einem Radträger angeordnet ist, der um eine vertikale Drehachse drehbar ist.

Für die jeweilige Antriebs- oder Laufachse der vorderen und der hinteren angetriebenen Räder ändert beim Übergang der jeweiligen Radaufhängung zwischen einer Ausgangsstellung und einer Laststellung ihre Relativlage zur horizontalen Drehachse des jeweils zugeordneten Rades der Schwenklastrollen. Dieses erfolgt derart, dass die vorderen und die hinteren abgetriebenen Räder in der Ausgangs- wie auch in der Laststellung im Kontakt mit der Bodenfläche stehen, wohingegen die Räder der jeweils zugeordneten Schwerlastlenkrollen in der Ausgangsstellung oberhalb der Bodenfläche und beabstandet hiervon angeordnet sind und in der Laststellung in Kontakt mit der Bodenfläche stehen.

Im Betrieb tragen also im unbelasteten oder wahlweise wenig belasteten Zustand die angetriebenen Räder die volle Last. Wenn die zu transportierende Last zum Übergang der Radaufhängung in die Laststellung führt, indem die Radaufhängung zum Beispiel um eine horizontale Schwenkachse geschwenkt wird, insbesondere nach oben, treten zusätzlich die Schwerlastlenkrollen in Kontakt mit der Bodenfläche, über welche das fahrerlose Schwertransportfahrzeug bewegt wird, und tragen so selbst zur Lastaufnahme bei. Die Ausgangsstellung der Radaufhängungen kann insoweit dem unbelasteten Zustand des Schwertransportfahrzeuges und wahlweise einem teilbelasteten Zustand entsprechen. Wird eine Grenzlast überschritten, so kommt es zum Bodenkontakt zwischen den Schwerlastlenkrollen und der Bodenfläche, die dann zusätzlich zu den angetriebenen Rädern zur Lastaufnahme beitragen. Ist diese Grenzlast nicht erreicht, hängen die Schwerlastlenkrollen in der Luft, haben also keinen Bodenkontakt. Die hierbei von den Radaufhängungen der angetriebenen Räder, welche unterschiedlichen Bauformen von an sich bekannten Radaufhängungen entsprechend gebildet sein können, ausgeführte Bewegung führt zur Änderung der Relativlage zwischen Antriebsachse der angetriebenen Räder und der horizontalen Drehachse des oder der jeweils zugeordneten Schwerlastlenkrollen. Hierzu kann die Verlagerung der Radaufhängung entkoppelt sein von den Schwerlastlenkrollen, sodass die Bewegung ausführbar ist, ohne eine Mitverlagerung der Schwerlastlenkrollen zu erzwingen. Aufgrund der Bewegung der Radaufhängung ändert die zugeordnete Antriebsachse ihre räumliche Lage in Beziehung zu dem oder den zugeordneten Schwerlastlenkrollen.

Die Zuordnung zwischen den angetriebenen Rädern einerseits und den Schwerlastlenkrollen andererseits kann auf verschiedene Art und Weise ausgebildet sein. So kann pro angetriebenes Rad eine Schwerlastlenkrolle vorgesehen sein. In einer anderen Ausführungsform ist eine einzelne Schwerlastlenkrolle mehreren angetriebenen Rädern zugeordnet, beispielsweise zwei angetriebenen Rädern. Auch der umgekehrte Fall kann vorgesehen sein. Die Zuordnung zwischen Schwerlastlenkrolle und angetriebenem Rad kann insbesondere bedeuten, dass die Schwerlastlenkrolle am Fahrgestell benachbart zu dem oder den angetriebenen Rädern angeordnet ist. In funktioneller Hinsicht bedeutet die Zuordnung zwischen Schwerlastlenkrolle und angetriebenem Rad, dass die zugeordnete Schwerlastlenkrolle im Betrieb hauptsächlich zur Aufnahme des Lastanteils beiträgt, welcher auf das oder die zugeordneten angetriebenen Räder wirkt.

Das Schwertransportfahrzeug kann als fahrerloses Schwertransportfahrzeug ausgeführt sein. Hierbei kann eine Ausbildung als selbstlenkendes Fahrzeug vorgesehen sein, bei der zum Beispiel eine geeignet Sensorik vorgesehen sein kann, die Markierungen abtastet, zum Beispiel Wegmarkierungen, um hieraus im Zusammenwirkung einer Fahrzeugsteuerung Steuersignale abzuleiten, die das Fahrzeug ohne Beteiligung eines Fahrzeugführers lenken. Alternativ oder ergänzend kann das Steuern und Lenken des fahrerlosen Schwertransportfahrzeugs durch einen Nutzer erfolgen, welcher neben dem Fahrzeug herläuft und eine tragbare Steuereinrichtung bedient, von welcher die Steuersignale auf die Fahrzeugsteuerung übertragen werden. In einer anderen Ausführung kann das Schwertransportfahrzeug einen Fahrersitz mit zugeordneten Lenk- und Steuerelementen aufweisen, bis hin zu einer Fahrerkabine.

Eine Weiterbildung sieht vor, dass die Schwerlastlenkrollen an dem Fahrgestell nicht schwenkbar um eine horizontale Achse angeordnet sind. Die Schwerlastlenkrollen können an einem starren Gestellelement oder -bauteil des Fahrgestells montiert sein. Aufgrund einer starren Verbindung zum Fahrgestell können die Schwenklastrollen in einer Ausgestaltung stets starr mit dem Fahrgestell insgesamt sich bewegen, insbesondere auf und nieder.

Bei den Schwerlastlenkrollen kann der um die vertikale Drehachse drehbare Radträger an einer Radaufnahme angeordnet sein, die am Fahrgestell fixiert ist. Die Radaufnahme kann nicht drehbar und / oder nicht schwenkbar am Fahrgestell montiert sein. Die Radaufnahme, welche die Verbindung zwischen dem drehbaren Radträger und dem Fahrgestell bildet, kann an einem starren Rahmen- oder Gestellelement des Fahrgestells aufgenommen sein.

Die Schwerlastlenkrollen können jeweils auf einer Innenseite des zugeordneten vorderen oder hinteren angetriebenen Rades angeordnet sein. Die Schwerlastlenkrollen können hierbei innenseitig benachbart zu einem oder mehreren zugeordneten angetriebenen Rädern am Fahrgestell angeordnet sein. Alternativ oder ergänzend kann auf der Außenseite des oder der zugeordneten vorderen oder hinteren angetriebenen Räder die Schwerlastlenkrolle am Fahrgestell angeordnet sein.

Eine Fortbildung kann vorsehen, dass die vorderen und die hinteren angetriebenen Räder jeweils mit Rädern gebildet sind, die in Richtung der Antriebsachse einander gegenüberliegen und deren Radauhängungen in Blickrichtung von oben auf das Fahrgestell außermittig am Fahrgestell gelagert sind. Radaufhängungen für mehrere hintere angetriebene Räder können getrennt und einzeln schwenkbar am Fahrgestell angeordnet sein. Alternativ oder ergänzend kann eine solche Ausgestaltung für die Radaufhängungen der vorderen angetriebenen Räder vorgesehen sein.

Die Radaufhängung für die vorderen und die hinteren angetriebenen Räder können zusätzlich über ein jeweiliges Funktionselement an das Fahrgestell koppeln, welches eingerichtet ist, die vorderen und die hinteren angetriebenen Räder über die Radaufhängung mit einem Anpressdruckkraft in Richtung Bodenfläche zu beaufschlagen. Mit Hilfe des jeweiligen Funktionselementes ist die Radaufhängung gegen ein Schwenken in die Laststellung, bei der dann auch die Schwerlastlenkrollen in Bodenkontakt treten, vorgespannt. Zusätzlich zur Gewichtskraft werden die angetriebenen Räder in Richtung Bodenfläche gedrückt.

Eine Weiterbildung kann vorsehen, dass das jeweilige Funktionselement eingerichtet ist, beim Erreichen einer Grenzkraft, die im Lastfall über die Radaufhängung auf das Funktionselement einwirkt, dass ein Einfedern der Radaufhängung aus der Ausgangsstellung hin zur Laststellung zugelassen ist. Das Einfedern kann elastisch erfolgen. Mittels konstruktiver Auslegung und / oder Einstellen des Funktionselementes kann die Grenzkraft bestimmt werden, so dass anwendungsabhängig der Übergang in die Laststellung, in welcher dann auch die Schwerlastlenkrollen in Kontakt mit der Bodenfläche stehen, festlegbar ist.

Bei einer Ausgestaltung kann vorgesehen sein, dass das jeweilige Funktionselement an eine Steuereinrichtung koppelt, die eingerichtet ist, die Grenzkraft einzustellen und / oder zu regeln. Die Steuereinrichtung kann eingerichtet sein, die Grenzkraft lastabhängig zu regeln. Hierdurch kann in einer Ausführung eine dynamische Regelung realisiert sein. Alternativ kann die Steuereinrichtung die Grenzkraft fest bestimmen, also insbesondere nicht lastabhängig. Die Steuereinrichtung kann am Fahrgestell angeordnet sein. Bei dieser oder anderen Ausführungsformen kann das Funktionselement mit einem Zylinder, einem Gasbalg und / oder einem Federelement gebildet sein. In einer Ausführung kann das Funktionselement mit einem Faltenbalg gebildet sein. Hierbei kann ein eingeschlossenes Gas- oder Ölvolumen zur Anwendung kommen. Alternativ oder ergänzend kann eine mechanische Feder zur Funktion des Funktionselementes beitragen. Mittels Vergrößern oder Verkleinern des Fluidvolumens kann zum Beispiel der Anpressdruck, welcher auf die Radaufhängung und hierüber schließlich auf die angetriebenen Räder ausgeübt wird, eingestellt werden. Gleichzeitig erfolgt hierüber ein Einstellen der Grenzkraft, bei der der Übergang in die Lastschwenkstellung erfolgt, in welcher dann die Schwerlastlenkrollen in Bodenkontakt treten.

Das jeweilige Funktionselement kann fahrgestellseitig um eine horizontale Schwenkachse schwenkbar gelagert sein, die oberhalb der horizontalen Schwenkachse der Radaufhängung angeordnet ist. In einer anderen Ausführung kann die horizontale Schwenkachse des Funktionselementes unterhalb der horizontalen Schwenkachse der Radaufhängung angeordnet sein. Auch ein nicht schwenkbar gelagerte Ausführung kann vorgesehen sein, zum Beispiel unter Verwendung eines Faltenbalges.

Die jeweilige Radaufhängung der vorderen und der hinteren angetriebenen Räder kann um eine jeweilige horizontale Schwenkachse schwenkbar an dem Fahrgestell angeordnet sein. Bei dieser Ausgestaltung führen die Radaufhängungen der angetriebenen Räder beim Übergang zwischen der Ausgangs- und der der Laststellung eine Schwenkbewegung aus, die zur Änderung der Relativlage zwischen Antriebsachse der angetriebenen Räder und der horizontalen Drehachse des oder der jeweils zugeordneten Schwerlastlenkrollen. Hierzu kann die Schwenkverlagerung der Radaufhängung entkoppelt von den Schwerlastlenkrollen sein, sodass die Schwenkbewegung ausführbar ist, ohne eine Mitverlagerung der Schwerlastlenkrollen zu erzwingen. Aufgrund der Schwenkbewegung der Radaufhängung ändert die zugeordnete Antriebsachse ihre räumliche Lage in Beziehung zu dem oder den zugeordneten Schwerlastlenkrollen.

### Beschreibung von Ausführungsbeispielen

Nachfolgend werden Ausführungsbeispiele unter Bezugnahme auf Figuren einer Zeichnung näher erläutert. Hierbei zeigen:
- Fig. 1: eine schematische Darstellung eines fahrerlosen Schwertransportfahrzeuges von vom und
- Fig. 2: eine schematische Darstellung einer Anordnung von Baugruppen des fahrerlosen Schwertransportfahrzeuges von oben.

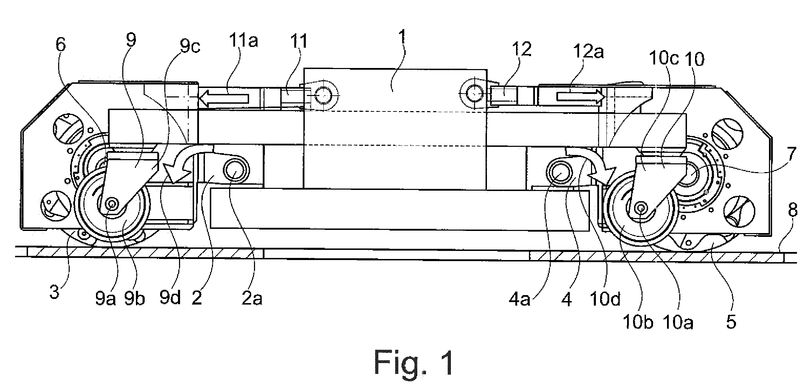

Fig. 1 zeigt eine schematische Darstellung eines Schwertransportfahrzeuges mit einem Fahrgestell 1, an dem eine Radaufhängung 2 für vordere angetriebene Räder 3 sowie eine weitere Radaufhängung 4 für hintere angetriebene Räder 5 angeordnet sind. In der gezeigten Ausführung ist das Schwertransportfahrzeug als ein fahrerloses Schwertransportfahrzeug ausgeführt. Alternativ oder ergänzend kann das Steuern und Lenken des fahrerlosen Schwertransportfahrzeugs durch einen Nutzer erfolgen, welcher neben dem Fahrzeug herläuft und eine tragbare Steuereinrichtung bedient, von welcher die Steuersignale auf die Fahrzeugsteuerung übertragen werden. In einer anderen Ausführung kann das Schwertransportfahrzeug einen Fahrersitz mit zugeordneten Lenk- und Steuerelementen aufweisen, bis hin zu einer Fahrerkabine.

Die angetriebene Räder 3, 5 sind auf einer horizontal ausgerichteten Antriebsachsen 6, 7 angeordnet. Die Radaufhängung sowie die weitere Radaufhängung 2, 4 sind jeweils um eine horizontal ausgerichtete Schwenkachse 2a, 4a schwenkbar. Alternativ kann vorgesehen sein, dass die Radaufhängung der angetriebenen Räder unter Verwendung einer Hydraulikeinrichtung gebildet und eingerichtet ist, die Räder entlang einer Linearachse zu führen, wenn das Fahrgestell mit einer Last beaufschlagt wird (nicht dargestellt).

In Fig. 1 ist für die Radaufhängungen 2, 4 eine Ausgangsschwenkstellung gezeigt, bei der die vorderen und die hinteren angetriebenen Räder 3, 5 in Kontakt mit einer Bodenfläche 8 stehen, wohingegen Schwerlastlenkrollen 9, 10, die den vorderen und den hinteren angetriebenen Rädern 3, 5 zugeordnet sind, von der Bodenfläche 8 abgehoben und hierzu beabstandet sind. Die Schwerlastlenkrollen 9, 10 weisen jeweils ein um eine horizontale Drehachse 9a, 10a freilaufendes Rad 9b, 10b auf. Das Rad 9b, 10b seinerseits wird von einem Radträger 9c, 10c gehalten, welches um eine vertikale Drehachse drehbar am Fahrgestell 1 aufgenommen ist.

Bei den vorderen und den hinteren angetriebenen Rädern 3, 5 handelt es sich in dem dargestellten Ausführungsbeispiel um sogenannte Mecanum-Räder, bei denen auf dem Radumfang mehrere Rollenkörper angeordnet sind, die an dem jeweiligen Rad drehbar und mit einer zur Antriebsachse des jeweiligen Rades schräg verlaufenden Drehachse gebildet sind. Derartige Räder sind in verschiedenen Ausgestaltungen als solche bekannt.

Die Radaufhängungen 2, 4 der vorderen und der hinteren angetriebenen Räder 3, 5 koppeln jeweils zusätzlich über ein Funktionselement 11, 12 gelenkig an das Fahrgestell 1, insbesondere schwenkbar. Die Funktionselemente 11, 12 sind eingerichtet, über die Radaufhängungen 2, 4 die vorderen und die hinteren angetriebenen Räder 3,5, zusätzlich zur Gewichtskraft, mit einem Anpressdruck in Richtung der Bodenfläche 8 zu beaufschlagen. Dies ist in Fig. 1 mittels Pfeilen 9d, 10d schematisch gezeigt. Die von den Funktionselementen 11, 12 bereitgestellte Druckkraft ist in Fig. 1 mittels Pfeilen 11a, 12a schematisch gezeigt.

Auf diese Weise werden die Radaufhängungen 2, 4 bis zum Überschreiten einer Grenzlast in der in Fig. 1 gezeigten Ausgangsstellung gehalten, in welcher die Schwenklastrollen 9, 10 von der Bodenfläche 8 abgehoben sind. Erst beim Überschreiten der Grenzlast federn die schwenkbar gelagerten Radaufhängungen 2, 4 nach oben gegen die Vorspannkraft der Funktionselemente 11, 12, so dass die Schwenklastrollen 9, 10 mit der Bodenfläche 8 in Kontakt träten (nicht dargestellt).

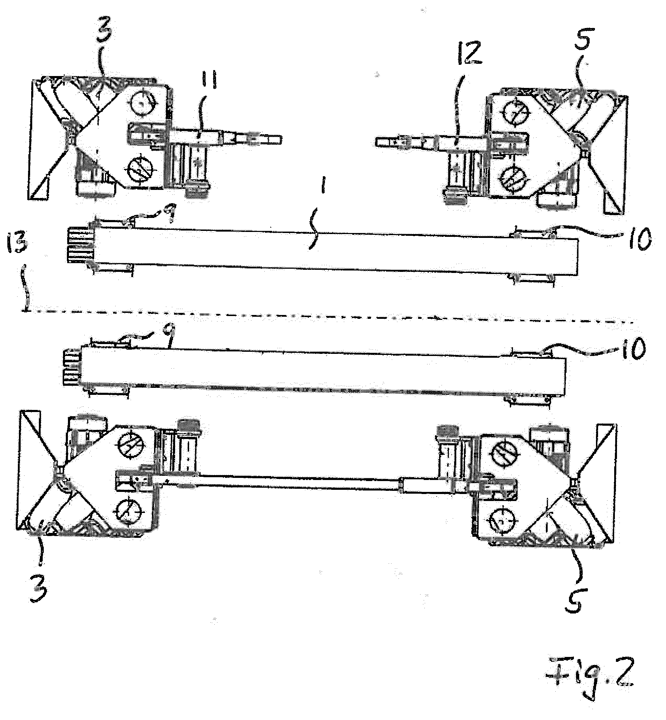

Fig. 2 zeigt eine schematische Darstellung einer Anordnung von Elementen des fahrerlosen Schwertransportfahrzeuges von oben ohne zugehörige Transportfläche. Es ergibt sich, dass bei dem gezeigten Ausführungsbeispiel die Schwerlastlenkrollen 9, 10 mit Zwillingsräder gebildet sind. Die schwenkbare Lagerung der Radaufhängungen 2, 4 erfolgt in Bezug auf die Mitte 13 des Schwertransportfahrzeuges außer mittig.

## Patentansprüche

1. Schwertransportfahrzeug zum Transportieren einer Last über eine Bodenfläche, mit:
- einem Fahrgestell (1), an dem eine Transportfläche angeordnet ist,
- vorderen und hinteren angetriebenen Rädern (3, 5), die jeweils mittels einer Radaufhängung (2, 4) am Fahrgestell (1) angeordnet sind und die jeweils mehrere auf dem Radumfang angeordnete Rollenkörper aufweisen, die an dem jeweiligen Rad drehbar und mit einer zur Antriebsachse (6, 7) des jeweiligen Rades schräg verlaufenden Drehachse angeordnet sind, und
- Schwerlastlenkrollen (9, 10), die jeweils den vorderen oder den hinteren angetriebenen Rädern (3, 5) zugeordnet sind und ein um eine horizontale Drehachse (9a, 10a) freilaufendes Rad (9b, 10b) aufweisen, welches an einem Radträger (9c, 10c) angeordnet ist, der um eine vertikale Drehachse drehbar ist,
**dadurch gekennzeichnet, dass** die jeweilige horizontale Antriebsachse (6, 7) der vorderen und der hinteren angetriebenen Räder (3, 5) beim Übergang der jeweiligen Radaufhängung (2, 4) zwischen einer Ausgangsstellung und einer Laststellung ihre Relativlage zur horizontalen Drehachse (9a, 10a) der jeweils zugeordneten Räder (9b, 10b) der Schwerlastlenkrollen (9, 10) ändert, derart, dass die vorderen und die hinteren angetriebenen Räder (3, 5) in der Ausgangs- und in der Laststellung im Kontakt mit der Bodenfläche (8) stehen, wohingegen die Räder (9b, 10b) der jeweils zugeordneten Schwerlastlenkrollen (9, 10) in der Ausgangsstellung oberhalb der Bodenfläche (8) und beabstandet hiervon angeordnet sind und in der Laststellung im Kontakt mit der Bodenfläche (8) stehen.

2. Schwertransportfahrzeug nach Anspruch 1, **dadurch gekennzeichnet, dass** die Schwerlastlenkrollen (9, 10) an dem Fahrgestell (1) nicht schwenkbar um eine horizontale Achse angeordnet sind.

3. Schwertransportfahrzeug nach Anspruch 1 oder 2, **dadurch gekennzeichnet, dass** bei den Schwerlastlenkrollen (9, 10) der um die vertikale Drehachse drehbare Radträger (9c, 10c) an einer Radaufnahme angeordnet ist, die am Fahrgestell (1) fixiert ist.

4. Schwertransportfahrzeug nach mindestens einem der vorangehenden Ansprüche, **dadurch gekennzeichnet, dass** die Schwerlastlenkrollen (9, 10) in Bezug auf das zugeordnete vordere oder hintere angetriebene Rad (3, 5) innenliegend angeordnet sind.

5. Schwertransportfahrzeug nach mindestens einem der vorangehenden Ansprüche, **dadurch gekennzeichnet, dass** die vorderen und die hinteren angetriebenen Räder (3, 5) jeweils mit Rädern gebildet sind, die in Richtung der Antriebsachse (6, 7) einander gegenüberliegen und deren Radauhängungen (2, 4) in Blickrichtung von oben auf das Fahrgestell (1) außermittig am Fahrgestell (1) gelagert sind.

6. Schwertransportfahrzeug nach mindestens einem der vorangehenden Ansprüche, **dadurch gekennzeichnet, dass** die Radaufhängung (2, 4) für die vorderen und die hinteren angetriebenen Räder (3, 5) zusätzlich über ein jeweiliges Funktionselement (11, 12) an das Fahrgestell (1) koppelt, welches eingerichtet ist, die vorderen und die hinteren angetriebenen Räder (3, 5) über die Radaufhängung (2, 4) mit einer Anpressdruckkraft in Richtung Bodenfläche (8) zu beaufschlagen.

7. Schwertransportfahrzeug nach Anspruch 6, **dadurch gekennzeichnet, dass** das jeweilige Funktionselement (11, 12) eingerichtet ist, beim Erreichen einer Grenzkraft, die im Lastfall über die Radaufhängung (2, 4) auf das Funktionselement (11, 12) einwirkt, ein Einfedern der Radaufhängung (2, 4) aus der Ausgangsstellung hin zur Laststellung zuzulassen.

8. Schwertransportfahrzeug nach Anspruch 7, **dadurch gekennzeichnet, dass** das jeweilige Funktionselement (11, 12) an eine Steuereinrichtung koppelt, die eingerichtet ist, die Grenzkraft einzustellen und / oder zu regeln.

9. Schwertransportfahrzeug nach mindestens einem der Ansprüche 6 bis 8 **dadurch gekennzeichnet, dass** das jeweilige Funktionselement (11, 12) fahrgestellseitig um eine horizontale Schwenkachse schwenkbar gelagert ist, die oberhalb der horizontale Schwenkachse (6, 7) der Radaufhängung (2, 4) angeordnet ist.

10. Schwertransportfahrzeug nach mindestens einem der vorangehenden Ansprüche, **dadurch gekennzeichnet, dass** die jeweilige Radaufhängung (2, 4) der vorderen und der hinteren angetriebenen Räder (3, 5) um eine jeweilige horizontale Schwenkachse (2a, 4a) schwenkbar an dem Fahrgestell (1) angeordnet ist.

11. Schwertransportfahrzeug nach mindestens einem der vorangehenden Ansprüche, **dadurch gekennzeichnet, dass** jedem der Rädern (3,5) ein Funktionselement (11, 12) zugeordnet ist.

## Claims

1. A heavy goods vehicle for transporting a load over a ground surface, comprising:
- a chassis (1) on which a transport surface is arranged,
- front and rear driven wheels (3, 5) which are each arranged by means of a wheel suspension (2, 4) on the chassis (1) and which each have a plurality of roller bodies arranged on the wheel circumference, which roller bodies are arranged on the respective wheel rotatably and with an axis of rotation running transversely to the drive axis (6, 7) of the respective wheel, and
- heavy-duty swivel castors (9, 10) which are assigned to the front or the rear driven wheels (3, 5) in each case and have a wheel (9b, 10b) running freely about a horizontal axis of rotation (9a, 10a) which is arranged on a wheel carrier (9c, 10c) which is rotatable about a vertical axis of rotation,
**characterized in that** the horizontal drive axle (6, 7) of the front and rear driven wheels (3, 5) in each case changes its relative position to the horizontal axis of rotation (9a, 10a) of the wheels (9b, 10b) assigned to the heavy-duty swivel castors (9, 10) in each case at the transition of the respective wheel suspension (2, 4) between an initial position and a load position, such that the front and rear driven wheels (3, 5) in the initial and load position are in contact with the ground surface (8), whereas the wheels (9b, 10b) of the heavy-duty swivel castors (9, 10) assigned in each case are arranged above the ground surface (8) in the initial position and spaced apart therefrom and are in contact with the ground surface (8) in the load position.

2. The heavy goods vehicle according to claim 1, **characterized in that** the heavy-duty swivel castors (9, 10) are arranged on the chassis (1) so as not to be pivotable about a horizontal axis.

3. The heavy goods vehicle according to claim 1 or 2, **characterized in that** in the case of the heavy-duty swivel castors (9, 10), the wheel carrier (9c, 10c) rotatable about the vertical axis of rotation is arranged on a wheel mount which is fixed to the chassis (1).

4. The heavy goods vehicle according to at least one of the preceding claims, **characterized in that** the heavy-duty swivel castors (9, 10) are arranged internally in relation to the associated front or rear driven wheel (3, 5).

5. The heavy goods vehicle according to at least one of the preceding claims, **characterized in that** the front and rear driven wheels (3, 5) are each formed with wheels lying opposite one another in the direction of the drive axle (6, 7) and their wheel suspensions (2, 4) are moun-ted on the chassis (1) eccentrically in the view of the chassis (1) from above.

6. The heavy goods vehicle according to at least one of the preceding claims, **characterized in that** the wheel suspension (2, 4) for the front and rear driven wheels (3, 5) is additionally coupled to the chassis (1) via a respective functional element (11, 12) which is set up to apply a contact pressure in the direction of the ground surface (8) to the front and rear driven wheels (3, 5) via the wheel suspension (2, 4).

7. The heavy goods vehicle according to claim 6, **characterized in that** the respective functional element (11, 12) is set up to allow a deflection of the wheel suspension (2, 4) from the initial position to the load position when a limit force is reached which, in the load case, acts on the functional element (11, 12) via the wheel suspension (2, 4).

8. The heavy goods vehicle according to claim 7, **characterized in that** the functional element (11, 12) in each case is coupled to a control device which is set up to adjust and/or regulate the limit force.

9. The heavy goods vehicle according to at least one of claims 6 to 8, **characterized in that** the functional element (11, 12) in each case is pivotably mounted on the chassis side about a horizontal pivot axis, which pivot axis is arranged above the horizontal pivot axis (6, 7) of the wheel suspension (2, 4).

10. The heavy goods vehicle according to at least one of the preceding claims, **characterized in that** the respective wheel suspension (2, 4) of the front and rear driven wheels (3, 5) is arranged pivotably about a respective horizontal pivot axis (2a, 4a) on the chassis (1).

11. The heavy goods vehicle according to at least one of the preceding claims, **characterized in that** each of the wheels (3, 5) is assigned a functional element (11, 12).

## Revendications

1. Véhicule de transport de charges lourdes pour transporter une charge sur une surface du sol, avec :
- un châssis (1) sur lequel une surface de transport est disposée,
- des roues entraînées antérieure et postérieure (3, 5), lesquelles sont respectivement disposées sur le châssis (1) au moyen d'une suspension de roue (2, 4) et lesquelles présentent respectivement plusieurs corps de roulement disposés sur le pourtour de roue, lesquels sont disposés de manière rotative sur la roue respective et avec un axe de rotation s'étendant en biais par rapport à l'axe d'entraînement (6, 7) de la roue respective, et
- des rouleaux de guidage de charges lourdes (9, 10) qui sont respectivement associés aux roues entraînées antérieure ou postérieure (3, 5) et qui présentent une roue à course libre (9b, 10b) autour d'un axe de rotation horizontal (9a, 10a), laquelle est disposée sur un support de roue (9c, 10c) qui peut tourner autour d'un axe de rotation vertical,
**caractérisé en ce que** l'axe d'entraînement horizontal (6, 7) respectif des roues entraînées antérieure et postérieure (3, 5), lors de la transition de la suspension de roue (2, 4) respective entre une position de départ et une position de charge, modifie sa position relative par rapport à l'axe de rotation horizontal (9a, 10a) des roues (9b, 10b) respectivement associées des rouleaux de guidage de charges lourdes (9, 10) de manière à ce que les roues entraînées antérieure et postérieure (3, 5) soient en contact avec la surface du sol (8) dans la position de départ et la position de charge, alors que les roues (9b, 10b) des rouleaux de guidage de charges lourdes (9, 10) respectivement associés sont disposées au-dessus de la surface du sol (8), dans la position de départ, et à distance de celle-ci, et en contact avec la surface du sol (8) dans la position de charge.

2. Véhicule de transport de charges lourdes selon la revendication 1, **caractérisé en ce que** les rouleaux de guidage de charges lourdes (9, 10) sont disposés sur le châssis (1) de manière à ne pas pouvoir pivoter autour d'un axe horizontal.

3. Véhicule de transport de charges lourdes selon la revendication 1 ou 2, **caractérisé en ce qu'**au niveau des rouleaux de guidage de charges lourdes (9, 10), le support de roue (9c, 10c) pouvant tourner autour de l'axe de rotation vertical est disposé sur un logement de roue qui est fixé sur le châssis (1).

4. Véhicule de transport de charges lourdes selon l'une au moins des revendications précédentes, **caractérisé en ce que** les rouleaux de guidage de charges lourdes (9, 10) sont disposés de manière à se situer à l'intérieur compte tenu de la roue entraînée antérieure ou postérieure (3, 5).

5. Véhicule de transport de charges lourdes selon l'une au moins des revendications précédentes, **caractérisé en ce que** les roues entraînées antérieure et postérieure (3, 5) sont respectivement formées avec des roues qui sont situées en vis-à-vis l'une de l'autre en direction de l'axe d'entraînement (6, 7) et dont les suspensions de roue (2, 4), en regardant depuis le haut sur le châssis (1), sont montées de manière excentrée sur le châssis (1).

6. Véhicule de transport de charges lourdes selon l'une au moins de revendications précédentes, **caractérisé en ce que** la suspension de roue (2, 4) pour les roues entraînées antérieure et postérieure (3, 5) est couplée de manière supplémentaire au châssis (1) via un élément fonctionnel (11, 12) respectif qui est étudié pour appliquer une force de pression d'application en direction de la surface du sol (8) aux roues d'entraînement antérieure et postérieure (3, 5) via la suspension de roue (2, 4).

7. Véhicule de transport de charges lourdes selon la revendication 6, **caractérisé en ce que**, en cas d'atteinte d'une force limite qui s'exerce en cas de charge sur l'élément fonctionnel (11, 12) via la suspension de roue (2, 4), l'élément fonctionnel (11, 12) respectif est étudié pour autoriser un galop de la suspension de roue (2, 4) de la position de départ vers la position de charge.

8. Véhicule de transport de charges lourdes selon la revendication 7, **caractérisé en ce que** l'élément fonctionnel (11, 12) respectif s'accouple avec un dispositif de commande qui est étudié pour régler et/ou réguler la force limite.

9. Véhicule de transport de charges lourdes selon l'une au moins des revendications 6 à 8, **caractérisé en ce que** l'élément fonctionnel (11, 12) respectif est monté du côté du châssis de manière à pouvoir pivoter autour d'un axe de pivotement horizontal qui est disposé au-dessus de l'axe de pivotement horizontal (6, 7) de la suspension de roue (2, 4).

10. Véhicule de transport de charges lourdes selon l'une au moins des revendications précédentes, **caractérisé en ce que** la suspension de roue (2, 4) respective des roues d'entraînement antérieure et postérieure (3, 5) est disposée de manière à pouvoir pivoter autour d'un axe de pivotement horizontal (2a, 4a) respectif sur le châssis (1).

11. Véhicule de transport de charges lourdes selon l'une au moins des revendications précédentes, **caractérisé en ce que** l'on associe un élément fonctionnel (11, 12) à chacune des roues (3, 5).
